# FASCICULE DE BREVET EUROPEEN

(11) **EP 3 111 779 B1**
(45) Date de publication et mention de la délivrance du brevet: **31.01.2018**
(21) Numéro de dépôt: 16174677.1
(22) Date de dépôt: 16.06.2016
(51) Int. Cl.: A23L 21/12

(54) **PROCÉDÉ DE FABRICATION DE CONFITURE**
HERSTELLUNGSVERFAHREN VON KONFITÜRE
METHOD FOR MANUFACTURING JAM

(30) Priorité: 30.06.2015 FR 1556128
(43) Date de publication de la demande: 04.01.2017
(73) Titulaire: Confiture L'Ardennaise SA, 4190 Xhoris (BE)
(72) Inventeur: Verhamme, Bernard, 1390 Grez-Doiceau (BE)
(74) Mandataire: Pautex Schneider, Nicole Véronique

(56) Documents cités:
- WO-A1-97/21476
- GB-A- 942 204
- NZ-A- 542 749
- US-A- 2 783 153

## Description

### Domaine de l'invention

L'invention concerne un procédé de fabrication de confiture aux fruits, et plus particulièrement un procédé qui permet d'obtenir une confiture ayant un goût et un aspect améliorés.

### Art antérieur

De manière générale, une confiture aux fruits est obtenue en cuisant un mélange de fruits et de sucre dans des proportions bien définies, et en portant le mélange à la consistance gélifiée appropriée.

Une bonne gélification dépend principalement de la teneur en pectines, de la teneur en sucres et du pH.

La fabrication industrielle d'une confiture aux fruits comporte de nombreuses étapes dans lesquelles le fruit est altéré, ces étapes allant de la préparation des fruits jusqu'au conditionnement du produit fini.

Les procédés industriels de fabrication de confitures aux fruits comprennent notamment les étapes suivantes :
- la préparation des fruits,
- le mélange des fruits préalablement préparés et de sucres dans un bac de pré-mélange,
- le transfert du mélange fruits-sucres depuis le bac de pré-mélange vers une cuve de cuisson par pompage,
- la cuisson du mélange fruits-sucres éventuellement dilué avec de l'eau, avec concentration du mélange par évaporation de liquide jusqu'à l'obtention du degré Brix requis au niveau du mélange,
- l'adjonction d'additifs spécifiques autorisés incluant notamment les pectines (épaississants), l'acide citrique (acidifiant), l'acide ascorbique (antioxydant) et l'acide lactique (conservateur),
- le conditionnement de la confiture obtenue,
- le refroidissement de la confiture conditionnée, et
- l'étiquetage.

Selon les normes usuellement en vigueur, une confiture doit contenir au minimum 35 % de fruits, et dans le cas d'une confiture dite "confiture extra", au minimum 45 % de fruits, avec cependant des exceptions pour certains fruits.

De plus, une confiture doit avoir un degré Brix, déterminé par réfractométrie, égal ou supérieur à 55°Brix, cette valeur correspondant à la valeur réfractométrique, déterminée à 20°C.

La valeur en degré Brix (°Brix) correspond à la teneur en matière sèche soluble ou teneur totale en sucres d'une confiture (sucres ajoutés + sucres provenant des fruits), en pourcent, ce qui signifie que dans le cas d'une "confiture" ou "confiture extra", la teneur en matière sèche soluble ou teneur totale en sucres doit être égale ou supérieure à 55 %.

Dans le cas d'une confiture dite "confiture allégée en sucre", les normes usuelles prévoient qu'elle doit contenir au moins 50 % de fruits et avoir un degré Brix ne dépassant pas 45°Brix et .

Dans le cas d'une confiture dite "compote", les normes usuelles prévoient un degré Brix égal ou supérieur à 24°Brix mais ne dépassant pas 40°Brix.

Les fruits utilisés apportent à la confiture leur arôme, couleur et saveur spécifiques, ainsi que l'acidité et une partie des matières pectiques nécessaires à la gélification et à la conservation.

L'étape la plus sensible d'un procédé industriel de fabrication de confiture est la cuisson des fruits avec les sucres car elle permet l'extraction de la pectine des fruits, l'inactivation des enzymes responsable de l'altération des propriétés organoleptiques du produit et l'évaporation de l'eau.

Cependant, l'étape de cuisson du mélange fruits-sucres peut entrainer une dégradation des pectines conduisant à une mauvaise gélification, une inversion du saccharose donnant un goût sableux, une perte d'arôme, un brunissement et une désagrégation des fruits.

Dans les procédés industriels de fabrication de confiture aux fruits à grande échelle connus, la cuisson du mélange fruits-sucres est généralement effectuée sous vide, permettant ainsi de diminuer la température et le temps de cuisson.

La cuisson sous vide est généralement effectuée à une température se situant dans une gamme allant de 65 à 75°C avec une pression résiduelle se situant dans une gamme allant de 30 à 40 millibars.

Cependant, les procédés industriels de fabrication de confitures à grande échelle connus conduisent à une altération de l'arôme, de la couleur et de la saveur des fruits, et de plus conduisent à une désagrégation des fruits.

D'autre part, le consommateur recherche des confitures au goût authentique, ayant une couleur plus claire, et contenant le plus de morceaux de fruits ou fruits entiers possible.

C'est pourquoi, il est nécessaire de développer à l'échelle industrielle des procédés qui permettent de préserver l'arôme et la saveur des fruits, de préserver les morceaux de fruits ou fruits entiers dans la confiture, et d'éviter que la confiture ne soit trop foncée.

Le procédé de production de confiture de la présente invention permet de surmonter les désavantages des procédés industriels de fabrication de confiture connus, et de fournir une confiture ayant un maximum de morceaux de fruits ou fruits entiers, une couleur plus claire, et dans laquelle l'arôme et la saveur des fruits sont préservés.

### Exposé de l'invention

L'invention a pour objet un procédé de production de confiture aux fruits comprenant les étapes suivantes :
(a) le transfert des fruits préalablement préparés dans une cuve de cuisson,
(b) la pré-cuisson des fruits contenus dans la cuve de cuisson,
(c) l'addition d'une quantité déterminée de sucres aux fruits précuits contenus de la cuve de cuisson,
(d) la cuisson sous vide du contenu de la cuve de cuisson, avec concentration du contenu de la cuve de cuisson par évaporation de liquide,
(e) la récupération d'une première fraction de liquide évaporé sous la forme d'un premier condensat,
(f) l'addition de pectine au premier condensat récupéré à l'étape (e) pour obtenir un mélange condensat-pectine,
(g) l'addition du mélange premier condensat-pectine obtenu à l'étape (f) au contenu de la cuve de cuisson,
(h) l'addition d'acide citrique au contenu de la cuve de cuisson, pour obtenir une confiture,
(i) la pasteurisation de la confiture,
(j) le conditionnement de la confiture pasteurisée dans des moyens de conditionnement.

De préférence, l'étape (b) de pré-cuisson des fruits contenus dans la cuve de cuisson est effectuée à une température se situant dans une gamme allant de 38 à 47°C.

De préférence, l'étape (d) de cuisson sous vide du contenu de la cuve de cuisson est effectuée à une température se situant dans une gamme allant de 62 à 67°C sous un vide manométrique de 70 à 84 % (-709,3 à -851,1 millibars), et plus préférentiellement, sous un vide manométrique de 72 à 80 % (-729,5 à -810,6 millibars).

De préférence, le premier condensat récupéré à l'étape (e) a un poids se situant dans une gamme allant de 7 à 18 % par rapport au poids total des fruits utilisés, et plus préférentiellement, dans une gamme allant de 9 à 12 % par rapport au poids total des fruits utilisés.

De préférence, le premier condensat récupéré à l'étape (e) contient majoritairement un condensat du liquide évaporé dans l'étape (d).

Le procédé de la présente invention peut comprendre en outre une étape de récupération d'une seconde fraction de liquide évaporé sous forme d'un second condensat.

De préférence, l'étape (g) d'addition du mélange premier condensat-pectine au contenu de la cuve de cuisson est effectuée après avoir porté le contenu de la cuve de cuisson à une température se situant dans une gamme allant de 65 à 75°C.

De préférence, l'étape (h) d'addition d'acide citrique au contenu de la cuve de cuisson est effectuée après l'étape (g) d'addition du mélange premier condensat-pectine au contenu de la cuve de cuisson.

Le procédé de la présente invention peut comprendre en outre une addition de citrate de calcium.

Le procédé de la présente invention peut comprendre en outre une ou plusieurs additions d'eau en tant que diluant.

De préférence, l'étape (i) de pasteurisation de la confiture est effectuée en portant la confiture contenue dans la cuve de cuisson à une température se situant dans une gamme allant de 86 à 89°C, puis en refroidissant la confiture contenue dans la cuve de cuisson à une température se situant dans une gamme allant de 75 à 80°C, le refroidissement de la confiture étant plus préférentiellement effectué en mettant la cuve de cuisson en pression négative à un vide manométrique de 45 à 50 % (-456 à -506,6 millibar).

De préférence, l'étape (j) de conditionnement de la confiture dans des moyens de conditionnement comprend une étape de transfert de la confiture pasteurisée dans une cuve tampon suivie d'une étape de remplissage des moyens de conditionnement à partir de la cuve tampon.

Le procédé de la présente invention peut comprendre en outre une étape de passage des moyens de conditionnement dans un tunnel de pasteurisation à une température de 100°C ± 3°C pendant une durée allant de 50 à 60 secondes.

De préférence, les fruits préalablement préparés transférés dans la cuve de cuisson sont des fruits décongelés.

D'autres caractéristiques, les buts et les avantages de la présente invention ressortiront plus clairement de la description détaillée suivante.

### Description détaillée de l'invention

La signification de certains termes utilisés dans la description et les revendications de la présente demande est clarifiée ci-dessous.

Le terme "confiture" englobe une confiture normale, une confiture extra, une confiture bio, une confiture allégée en sucre ou une compote, à moins qu'autre chose ne soit spécifié.

Le terme "sucres" englobe le sucre de canne (saccharose), le sucre de betterave (saccharose), le sucre des fruits (fructose), le sucre de raisin (glucose, fructose), le sucre inverti, les sucres liquides sous la forme de jus ou sirops issus de fruits purifiés et concentrés, et les mélange de ceux-ci, à moins qu'autre chose ne soit spécifié.

Le terme "sucre" se rapporte à du sucre cristallisé de betterave ou à du sucre de canne cristallisé (saccharose), à moins qu'autre chose de soit spécifié.

Le terme "confiture allégée en sucre" englobe une confiture dans laquelle le sucre (saccharose) a été remplacé partiellement ou totalement par des sucres autres que le saccharose.

Le terme "pectine" en tant qu'additif ajouté dans le procédé de la présente invention englobe les pectines autorisées dans l'industrie alimentaire, à moins qu'autre chose ne soit spécifié.

Les termes "fruits" et "fruits préalablement préparés" englobe les fruits entiers préalablement préparés, les morceaux de fruits préalablement préparés, les mélanges de ceux-ci, et les mélanges de pulpes et de zestes d'agrumes préalablement préparés, à moins qu'autre chose ne soit spécifié.

L'identification des étapes du procédé par les lettres (a) à (j) est utilisée pour identifier les étapes du procédé les unes des autres, et ne doit en aucun cas être interprétée comme excluant la mise en oeuvre d'étapes additionnelles.

Pour la mise en oeuvre du procédé de la présente invention, on utilise un appareillage comprenant notamment une cuve de cuisson munie d'un condenseur et d'au moins une cuve de récupération de condensat de manière à permettre la récupération de la vapeur générée dans la cuve de cuisson sous forme de condensat, et à une pompe à vide munie d'un manomètre de manière à permettre la mise en pression négative contrôlée de l'intérieur de la cuve de cuisson.

Le procédé de production de confiture aux fruits de la présente invention comprend une étape (a) de transfert des fruits préalablement préparés dans une cuve de cuisson.

Les fruits utilisés en tant que matière première pour la mise en oeuvre du procédé de la présente invention doivent être sains, en bon état et propres, d'un degré de maturité approprié, exempts de toute détérioration et dont aucun de leurs principaux constituants n'a été enlevé, excepté ce qui a été retiré par le parage, le triage, le pelage et autres traitement de manière à éliminer les tâches, meurtrissures, queues, trognons, noyaux ou pépins.

Les fruits utilisés en tant que matière première pour la mise en oeuvre du procédé de la présente invention peuvent être entiers ou en morceaux, et peuvent être frais, en conserve, emballés ou congelés.

Les étapes de préparation des fruits utilisés en tant que matière première pour la production industrielle d'une confiture dépendent de la taille et de la nature des fruits, et sont bien connues de l'homme du métier.

De manière générale, les fruits préalablement préparés qui sont transférés dans la cuve de cuisson lors de l'étape (a) du procédé de la présente invention peuvent être des fruits frais à température ambiante, des fruits provenant de conserves à température ambiante, des fruits provenant d'emballages à température ambiante, ou des fruits décongelés.

De préférence, on utilisera des fruits congelés qui auront été préalablement décongelés avant leur transfert dans la cuve de cuisson.

De préférence, la procédure de déstockage et de décongélation des fruits congelés pour leur utilisation dans l'étape (a) du procédé de la présente invention est la suivante.

Après réception ou stockage des fruits à une température de -21°C, les fruits sont sortis des cartons et placés dans des bacs en plastique (Palox), puis les fruits sont stockés à température ambiante pendant une durée de temps définie en fonction de la quantité de fruits à décongeler et de la température ambiante.

Le Tableau 1 ci-dessous reporte à titre d'exemple le temps nécessaire à la décongélation des fruits en fonction de la température ambiante et des quantités à décongeler.

**Tableau 1**

| | Quantités à décongeler | | | | |
|---|---|---|---|---|---|
| Température ambiante | 2000 Kg | 3000 Kg | 5000 Kg | 7000 Kg | 10 000 Kg |
| - 10 à - 5°C | 60 h | 65 h | 75 h | 98 h | 120 h |
| - 5 à 0°C | 55 h | 60 h | 70 h | 84 h | 96 h |
| 0 à 5°C | 50 h | 55 h | 65 h | 75 h | 84 h |
| 5 à 10°C | 45 h | 50 h | 60 h | 68 h | 75 h |
| 10 à 15°C | 30 h | 35 h | 46 h | 53 h | 60 h |
| 15 à 20°C | 24 h | 30 h | 40 h | 46 h | 52 h |
| 25 à 30°C | 18 h | 24 h | 34 h | 40 h | 48 h |

Le transfert des fruits décongelés dans la cuve de cuisson est de préférence effectué lorsque les sondes de température placées dans les bacs indiquent une température se situant dans une gamme allant de -2°C à 7°C.

Si les fruits sont encore gelés lors de leur transfert dans la cuve de cuisson, ils seront plus fragiles et se casseront, provoquant ainsi une désagrégation désavantageuse des fruits.

Le transfert des fruits dans la cuve de cuisson est de préférence effectué par aspiration lente des fruits dans la cuve de cuisson après avoir placé la cuve de cuisson en pression négative au moyen d'une pompe à vide.

Lors de cette étape de transfert des fruits dans la cuve de cuisson, le vide manométrique est de préférence pas supérieur à 45 % (- 456 millibars) afin d'éviter que les fruits se cassent ou se désagrègent.

Le procédé de la présente invention comprend une étape (b) de pré-cuisson des fruits contenus dans la cuve de cuisson.

L'étape (b) de pré-cuisson des fruits contenus dans la cuve de cuisson commence dès le début du transfert des fruits dans la cuve de cuisson.

Lors de la pré-cuisson des fruits contenus dans la cuve de cuisson, la pression négative augmente jusqu'à aller à -0 millibar et atteindre la pression atmosphérique, et la pré-cuisson des fruits est de préférence poursuivie à pression atmosphérique jusqu'à ce que contenu de la cuve de cuisson atteigne une température se situant dans une gamme allant de 38 à 47°C, et plus préférentiellement dans une gamme allant de 40 à 45°C.

Cette température est généralement atteinte après une durée de temps allant de 7 à 15 minutes à partir du moment où la pression atmosphérique est atteinte.

Lors de l'étape (b) de pré-cuisson des fruits contenus dans la cuve de cuisson, les fruits contenus dans la cuve de cuisson deviennent avantageusement plus clairs.

Cette étape de pré-cuisson des fruits peut être effectuée en présence d'eau ajoutée dans la cuve de cuisson.

Le procédé de la présente invention comprend une étape (c) d'addition d'une quantité déterminée de sucres aux fruits précuits contenus de la cuve de cuisson.

L'addition de sucres aux fruits précuits contenus dans la cuve de cuisson est de préférence effectuée par aspiration des sucres dans la cuve de cuisson après avoir placé la cuve de cuisson en pression négative au moyen d'une pompe à vide, de préférence avec un vide manométrique pas supérieur à 45 % (- 456 millibars).

Les sucres ajoutés dans cette étape incluent de préférence le sucre de betterave cristallisé (saccharose), le sucre de canne cristallisé (saccharose), les sucres de fruits sous forme liquide (fructose, glucose) et les mélanges de ceux-ci.

Le type de sucres ajouté dépend principalement du type de confiture visé.

Pour la production d'une confiture ou confiture extra, on ajoute de préférence du sucre de betterave cristallisé.

Pour la production d'une confiture ou confiture extra dite "bio", on ajoute de préférence du sucre de canne cristallisé.

Pour la production d'une confiture allégée en sucre, on ajoute de préférence une quantité réduite de sucre cristallisé, et on peut optionnellement ajouter des sucres autres que le saccharose, les quantités de sucres ajoutées étant déterminée de manière à atteindre un degré Brix final ne dépassant pas 45°Brix.

Dans le cas d'une confiture allégée en sucre de type "confiture sans sucre ajouté" ou dans le cas d'une confiture de type "compote", on ajoute uniquement des sucres autres que le saccharose sous forme liquide.

Ces sucres liquides autres que le saccharose sont ajoutés sous forme de sirops ou jus issus de fruits purifiés et concentrés, et incluent principalement du fructose et du glucose.

L'addition de sucres permet de refroidir brutalement le contenu de la cuve de cuisson, et ainsi de fixer avantageusement la couleur des fruits après éclaircissement du mélange lors de l'étape (b) de pré-cuisson.

Les sucres liquides ou solides peuvent en outre être dilués avec un diluant tel que de l'eau avant leur adjonction dans la cuve de cuisson.

La quantité de sucres ajoutée dans la cuve de cuisson dépend de la quantité de fruits préalablement chargés dans la cuve de cuisson, du type de fruits utilisé, du type de confiture visé, du type de sucres utilisé, et du degré Brix final visé.

La détermination de la quantité de sucres à ajouter en fonction des différents paramètres ci-dessus est une procédure bien connue de l'homme du métier.

Le procédé de la présente invention comprend une étape (d) de cuisson sous vide du contenu de la cuve de cuisson, avec concentration du contenu de la cuve de cuisson par évaporation de liquide.

Lors de cette étape (d), la cuisson sous vide du contenu de la cuve de cuisson est de préférence effectuée à une température se situant dans une gamme allant de 62 à 67°C, et plus préférentiellement à une température se situant dans une gamme allant de 63 à 66°C.

Lors de cette étape (d), la cuisson sous vide du contenu de la cuve de cuisson est effectuée sous pression négative, de préférence avec un vide manométrique allant de 70 à 84 % (-709,3 à -851,1 millibars).

Un vide manométrique supérieur à 84 % conduit désavantageusement à une désagrégation significative des fruits.

Un vide manométrique inférieur à 70 % rallonge désavantageusement le temps de cuisson, pouvant entraîner ainsi un changement des structures chimiques des composés contenus dans la cuve de cuisson et conduire à une altération de l'arôme et de la saveur de la confiture.

Afin d'obtenir une confiture dans laquelle les fruits ou morceaux de fruits sont préservés au maximum, la cuisson sous vide du contenu de la cuve de cuisson est plus préférentiellement effectuée avec un vide manométrique de 72 à 80 % (-729.5 à -810.6 millibars).

Lors de cette étape (d), le pourcentage de vide est de préférence choisi en fonction du type de fruits.

Par exemple, pour la cuisson des fraises, le vide manométrique est de préférence choisi dans une gamme allant de 78 à 80 % (-790,3 à -810,6 millibars) et pour la cuisson des abricots ou des pêches, le vide manométrique est de préférence choisi dans une gamme allant de 72 à 76 % (-729,5 à -770,1 millibars).

Cette étape (d) de cuisson sous vide du contenu de la cuve de cuisson conduit à une concentration du contenu de la cuve de cuisson par évaporation du liquide contenu dans la cuve de cuisson.

La cuisson sous vide du contenu de la cuve de cuisson peut être effectuée en présence d'eau ajoutée dans la cuve de cuisson.

La cuisson sous vide du contenu de la cuve de cuisson est de préférence poursuivie jusqu'à l'obtention d'un degré Brix déterminé.

Lors de l'évaporation du liquide conduisant à la concentration du contenu de la cuve de cuisson, une quantité significative de composés volatils appartenant à l'arôme et à la saveur des fruits est également évaporée.

Ainsi, la vapeur générée lors de cette étape (d) contient une quantité significative de composés volatils appartenant à l'arôme et à la saveur des fruits.

Afin d'obtenir une confiture dans laquelle tout l'arôme et la saveur des fruits sont préservés, la présente invention propose de récupérer sous forme de condensat la vapeur générée dans la cuve cuisson afin de récupérer les composés volatils appartenant à l'arôme et à la saveur des fruits pour leur incorporation ultérieure au contenu de la cuve de cuisson.

Une étude approfondie a été effectuée pour le compte de la demanderesse à l'échelle du laboratoire afin de déterminer les facteurs ayant un effet significatif sur la libération de ces composés volatils ainsi que les fractions de condensat contenant ces composés volatils.

Cette étude effectuée à l'échelle du laboratoire comprenait notamment des tests de distillation effectués sur divers types de fruits afin de déterminer quelles fractions de distillat contenaient des composés volatils appartenant à l'arôme et à la saveur des fruits, et à partir de quelle fraction le distillat ne contenait plus de composés volatils appartenant à l'arôme et à la saveur des fruits.

Cette étude a révélé que la quantité de composés volatils appartenant à l'arôme et à la saveur des fruits contenus dans les différents distillats dépendait du type de fruits.

Ainsi, cette étude à l'échelle du laboratoire a révélé par exemple que les groseilles et les cassis libéraient leurs composés volatils beaucoup plus rapidement que les framboises, et que les oranges libéraient leurs composés volatils plus lentement que les baies.

Suite aux résultats révélés par cette étude, la demanderesse a effectué des tests à l'échelle industrielle et a pu déterminer que pour la plupart des fruits, les composés volatils appartenant à l'arôme et à la saveur des fruits étaient principalement contenus dans une première fraction de condensat dont le poids correspond à environ 10 %, par rapport au poids total des fruits utilisés.

En outre, il s'est avéré que pour certains fruits, des composés volatils résiduels appartenant à l'arôme et à la saveur des fruits pouvaient encore être contenus dans une seconde fraction de condensat.

Sur cette base, l'étape (e) du procédé de la présente invention comprend la récupération d'une première fraction de liquide évaporé sous la forme d'un premier condensat.

Lors des étapes précédentes, la cuve de cuisson peut avoir été mise en pression négative de sorte que l'évaporation d'une certaine quantité de liquide contenant des composés volatils appartenant à l'arôme et à la saveur des fruits a pu se produire.

Ainsi, le premier condensat récupéré à l'étape (e) contient de préférence majoritairement un condensat du liquide évaporé dans l'étape (d), mais peut également contenir un condensat du liquide qui a pu s'évaporer lors des étapes précédentes.

De préférence, le premier condensat récupéré à l'étape (e) du procédé de la présente invention a un poids se situant dans une gamme allant de 7 à 18 % par rapport au poids total des fruits utilisés, plus préférentiellement dans une gamme allant de 8 à 15 %, et encore plus préférentiellement dans une gamme de 9 à 12 % par rapport au poids total des fruits utilisés.

Le procédé de la présente invention peut également comprendre une étape de récupération d'une seconde fraction de liquide évaporé sous la forme d'un second condensat encore susceptible de contenir des composés volatils appartenant à l'arôme et à la saveur des fruits.

Lors de la mise en oeuvre du procédé de la présente invention, le premier condensat est récupéré dans une première cuve de récupération de condensat, et le cas échéant, un second condensat est récupéré dans une seconde cuve de récupération de condensat.

Dans le cas où l'on récupère un second condensat, le poids du second condensat récupéré dépendra du type de fruits utilisé et notamment de son °Brix, de la quantité de fruits utilisée, et du poids du premier condensat récupéré à l'étape (e) et sera déterminé au cas par cas en fonction des paramètres ci-dessus.

La récupération du premier condensat est une étape essentielle du procédé de la présente invention en ce sens qu'elle permet de récupérer la plus grande partie des composés volatils appartenant à l'arôme et à la saveur des fruits pour leur réincorporation au contenu de la cuve de cuisson, et ainsi de fournir une confiture dans laquelle l'arôme et la saveur des fruits sont préservés.

La récupération d'un second condensat peut également se révéler avantageuse en ce sens qu'elle peut permettre de récupérer, le cas échéant, les composés volatiles résiduels appartenant à l'arôme et à la saveur des fruits pour leur incorporation ultérieure au contenu de la cuve de cuisson.

Le procédé de la présente invention comprend une étape (f) d'addition de pectine au premier condensat récupéré à l'étape (e) de manière à obtenir un mélange premier condensat-pectine.

La pectine utilisée peut être de la pectine en poudre, de la pectine liquide, et de la pectine en poudre ou liquide diluée dans de l'eau.

Le type de pectine utilisé dépendra du type de fruits utilisé, du type de confiture en cours de production, et de la texture de la confiture visée.

De préférence, on utilisera de la pectine en poudre.

On peut citer à titre d'exemple la pectine rapide en poudre et la pectine lente en poudre.

La quantité de pectine utilisée dépendra du type de fruits utilisé, et notamment de la richesse en pectines des fruits utilisés, du poids des fruits utilisés, du type de pectine utilisé, du type de confiture en cours de production, et de la texture de la confiture visée.

L'homme du métier est capable de choisir le type et la quantité de pectine à ajouter au premier condensat en fonction des paramètres ci-dessus.

Le procédé de la présente invention comprend une étape (g) d'addition du mélange premier condensat-pectine obtenu à l'étape (f) au mélange contenu dans la cuve de cuisson, à pression atmosphérique.

L'addition du mélange premier condensat-pectine au contenu de la cuve de cuisson est de préférence effectué après avoir porté le contenu de la cuve de cuisson à une température se situant dans une gamme allant de 65 à 75°C, et plus préférentiellement dans une gamme allant de 71 à 73°C.

Si la température du mélange contenu dans la cuve de cuisson est inférieure à 65°C, les pectines peuvent se figer, conduisant ainsi désavantageusement à une confiture ayant une texture trop liquide.

Cette étape (g) du procédé de la présente invention permet la réincorporation des composés volatils appartenant à l'arôme et à la saveur des fruits au contenu de la cuve de cuisson afin de fournir une confiture ayant un arôme et une saveur améliorés.

Le procédé de la présente invention comprend une étape (h) d'addition d'acide citrique au contenu de la cuve de cuisson pour obtenir une confiture.

L'acide citrique a comme rôle d'activer les pectines, et de fournir une confiture ayant une texture appropriée.

L'étape (h) d'addition d'acide citrique peut être effectuée soit simultanément à l'addition du mélange premier condensat-pectine au contenu de la cuve de cuisson, soit ultérieurement à l'addition du mélange premier condensat-pectine au contenu de la cuve de cuisson.

De préférence, l'étape (h) d'addition d'acide citrique sera effectuée après l'addition du mélange premier condensat-pectine au contenu de la cuve de cuisson.

L'acide citrique utilisé peut être sous une forme pure ou sous une forme diluée avec de l'eau.

La quantité d'acide citrique ajoutée dépendra de l'acidité des fruits utilisés, du type de pectine utilisé, de la quantité de pectine ajoutée, du pH du contenu de la cuve de cuisson, et du type de confiture en cours de production.

La détermination de la quantité d'acide citrique à ajouter en fonction des paramètres ci-dessus est une procédure bien connue de l'homme du métier.

Après l'addition d'acide citrique au contenu de la cuve de cuisson, les composés volatils appartenant à l'arôme et la saveur des fruits sont fixés par les sucres, de sorte que les composés volatils appartenant à l'arôme et à la saveur des fruits ne s'évaporent plus de la confiture.

Après addition de l'acide citrique au contenu de la cuve de cuisson, le degré Brix peut être adapté en injectant un diluant tel que de l'eau ou, le cas échéant, une fraction ou la totalité d'un second condensat récupéré et/ou en évaporant une certaine quantité de liquide contenu dans la cuve de cuisson, de manière à obtenir le degré Brix visé.

Le procédé de la présente invention peut également comprendre addition de citrate de calcium.

Le citrate de calcium en tant qu'additif peut être ajouté en tant que correcteur d'acidité et/ou conservateur.

En raison de sa fonction de conservateur, une addition de citrate de calcium est particulièrement avantageuse lorsque le procédé de la présente invention est appliqué à la préparation d'une confiture de type allégée en sucre ou sans sucre ajouté.

Le citrate de calcium peut être ajouté simultanément à l'acide citrique ou ultérieurement à l'acide citrique, et peut être ajouté dilué dans de l'eau ou, le cas échéant, dans une fraction d'un second condensat.

Le procédé de la présente invention peut également comprendre l'addition d'autres additifs autorisés dans l'industrie alimentaire tels que antioxydants, des conservateurs et autres, mais l'addition de ces autres additifs n'est pas préférable en ce sens que ces additifs peuvent altérer le goût et le côté naturel de la confiture produite.

Le procédé de la présente invention comprend une étape (i) de pasteurisation de la confiture.

Cette étape (i) de pasteurisation de la confiture comprend une étape de chauffage de la confiture qui est de préférence effectuée en portant la confiture contenue dans la cuve de cuisson à une température si situant dans une gamme allant de 86 à 89°C, de préférence de 87 à 88°C, et en laissant le mélange à cette température pendant 100 à 200 secondes, de préférence 150 à 180 secondes.

Si la température est supérieure à 89°C, la confiture devient désavantageusement plus foncée.

Cette étape (i) de pasteurisation de la confiture comprend également une étape de refroidissement rapide de la confiture chauffée, de préférence jusqu'à une température se situant dans une gamme allant de 75 à 80 °C, et plus préférentiellement jusqu'à une température se situant dans une gamme allant de 77 à 78°C, cette étape permettant d'éviter que les fruits ne remontent à la surface après le remplissage des moyens de conditionnement, et de fixer définitivement la couleur de la confiture.

Cette étape de refroidissement est de préférence effectuée en mettant la cuve de cuisson en pression négative, de préférence à un vide manométrique de 45 à 50 % (-456 à -506,6 millibar).

Un vide manométrique supérieur à 50 % conduit désavantageusement à une explosion des fruits.

Un vide manométrique inférieur à 45 % ne permet pas d'atteindre suffisamment rapidement la température visée.

Le procédé de la présente invention comprend une étape (j) de conditionnement de la confiture pasteurisée dans des moyens de conditionnement.

Cette étape (j) comprend de préférence le transfert de la confiture pasteurisée dans une cuve tampon, suivi du remplissage des moyens de conditionnement à partir de la cuve tampon.

Lors du remplissage des moyens de conditionnement, la confiture est de préférence à une température se situant dans une gamme allant de 67 à 80°C, et plus préférentiellement de 67°C à 78°C.

Cette procédure permet avantageusement de libérer rapidement la cuve de cuisson et de procéder à l'étape de remplissage des moyens de conditionnement pendant qu'un nouveau cycle du procédé de la présente invention est mis en oeuvre.

Après remplissage, les moyens de conditionnement sont de préférence acheminés pour traverser un tunnel de pasteurisation à une température de 100°C ± 3°C pendant une durée allant de 50 à 60 secondes.

Les moyens de conditionnement peuvent ensuite être acheminés vers un dispositif assurant leur étiquetage, codage et emballage, ce type de dispositif étant bien connu de l'homme du métier.

En tant moyens de conditionnement, on utilisera de préférence des pots ou des bocaux en verre, mais d'autres moyens de conditionnement usuels pour le conditionnement d'une confiture peuvent également être utilisés.

L'exemple suivant est destiné à illustrer la présente invention. Cependant, il ne doit en aucun cas être considéré comme limitant l'étendue de la présente invention.

### Exemple

Une cuve de cuisson de 2500 litres munie d'un condenseur et d'une cuve de récupération de condensat a été placée sous un vide manométrique de 40 % (-435 milibars) et 1240 kg de fraises issues de culture biologique, préalablement préparées et décongelées à une température de 7°C, ont été chargés par aspiration dans la cuve de cuisson.

Les fraises contenues dans la cuve de cuisson ont ensuite été chauffées à une température de 45°C sous pression atmosphérique pendant 15 minutes.

La cuve de cuisson a ensuite replacée sous un vide manométrique de 40 % (-435 millibars) et 1386,05 kg de sucre de canne issue de culture biologique cristallisé ont été chargés par aspiration dans la cuve de cuisson de manière à produire un mélange fraises précuites-sucre.

La cuve de cuisson a ensuite été placée sous un vide manométrique de 78 % (-790,3 millibars) puis le mélange fraises-sucre a été cuit sous vide à une température de 65°C pendant 15 minutes, permettant ainsi d'obtenir un premier condensat dans une cuve de récupération de condensat, ce premier condensat ayant un poids de 115 kg (9,3 % en poids par rapport au poids initial des fraises).

Le premier condensat a été récupéré, puis on a ajouté à celui-ci 4,160 kg de poudre de pectine rapide pour obtenir un mélange premier condensat-pectine.

Le contenu de la cuve de cuisson a ensuite été porté à une température de 72°C sous pression atmosphérique, puis le mélange premier condensat-pectine a été incorporé au contenu de la cuve de cuisson à cette température.

Ensuite, 20,196 kg d'un mélange acide citrique et eau (50 % en poids d'acide citrique et 50 % en poids d'eau) ont été ajoutés au contenu de la cuve de cuisson pour obtenir une confiture.

Le degré Brix a ensuite été ajusté à 60°Brix tel que mesuré au réfractomètre par évaporation de liquide.

La confiture a ensuite été pasteurisée par chauffage à 87°C, suivi d'un refroidissement à 78 °C en mettant la cuve de cuisson sous un vide manométrique de 45 % (-456 millibars).

La confiture a ensuite été transférée dans une cuve tampon, puis la confiture portée à une température se situant dans une gamme allant de 67 à 78°C a été conditionnée dans des pots en verre. Les pots remplis ont ensuite été acheminés de manière à traverser un tunnel de pasteurisation à 100°C pendant une période de 53 secondes, puis acheminés vers un dispositif d'étiquetage, codage et emballage.

## Revendications

1. Procédé de production de confiture aux fruits comprenant les étapes suivantes :
(a) le transfert des fruits préalablement préparés dans une cuve de cuisson,
(b) la pré-cuisson des fruits contenus dans la cuve de cuisson,
(c) l'addition d'une quantité déterminée de sucres aux fruits précuits contenus de la cuve de cuisson,
(d) la cuisson sous vide du contenu de la cuve de cuisson, avec concentration du contenu de la cuve de cuisson par évaporation de liquide,
(e) la récupération d'une première fraction de liquide évaporé sous la forme d'un premier condensat,
(f) l'addition de pectine au premier condensat récupéré à l'étape (e) pour obtenir un mélange condensat-pectine,
(g) l'addition du mélange premier condensat-pectine obtenu à l'étape (f) au contenu de la cuve de cuisson,
(h) l'addition d'acide citrique au contenu de la cuve de cuisson, pour obtenir une confiture,
(i) la pasteurisation de la confiture,
(j) le conditionnement de la confiture pasteurisée dans des moyens de conditionnement.

2. Procédé de production de confiture aux fruits selon la revendication 1, dans lequel l'étape (b) de pré-cuisson des fruits contenus dans la cuve de cuisson est effectuée à une température se situant dans une gamme allant de 38 à 47°C.

3. Procédé de production de confiture aux fruits selon la revendication 1 ou 2, dans lequel l'étape (d) de cuisson sous vide du contenu de la cuve de cuisson est effectuée à une température se situant dans une gamme allant de 62 à 67°C sous un vide manométrique de 70 à 84 % (-709,3 à -851,1 millibars).

4. Procédé de production de confiture aux fruits selon la revendication 3, dans lequel l'étape (d) de cuisson sous vide du contenu de la cuve de cuisson est effectuée sous un vide manométrique de 72 à 80 % (-729,5 à -810,6 millibars).

5. Procédé de production de confiture aux fruits selon l'une quelconque des revendications 1 à 4, dans lequel le premier condensat récupéré à l'étape (e) a un poids se situant dans une gamme allant de 7 à 18 % par rapport au poids total des fruits utilisés.

6. Procédé de production de confiture aux fruits selon la revendication 5, dans lequel le premier condensat récupéré à l'étape (e) a un poids se situant dans une gamme allant de 9 à 12 % par rapport au poids total des fruits utilisés.

7. Procédé de production de confiture aux fruits selon l'une quelconque des revendications 1 à 6, dans lequel le premier condensat récupéré à l'étape (e) contient majoritairement un condensat du liquide évaporé dans l'étape (d).

8. Procédé de production de confiture aux fruits selon l'une quelconque des revendications 1 à 7, comprenant en outre une étape de récupération d'une seconde fraction de liquide évaporé sous forme d'un second condensat.

9. Procédé de production de confiture aux fruits selon l'une quelconque des revendications 1 à 8, dans lequel l'étape (g) d'addition du mélange premier condensat-pectine au contenu de la cuve de cuisson est effectuée après avoir porté le contenu de la cuve de cuisson à une température se situant dans une gamme allant de 65 à 75°C.

10. Procédé de production de confiture aux fruits selon l'une quelconque des revendications 1 à 9, dans lequel l'étape (h) d'addition d'acide citrique au contenu de la cuve de cuisson est effectuée après l'étape (g) d'addition du mélange premier condensat-pectine au contenu de la cuve de cuisson.

11. Procédé de production de confiture aux fruits selon l'une quelconque des revendications 1 à 10, comprenant en outre une addition de citrate de calcium.

12. Procédé de production de confiture aux fruits selon l'une quelconque des revendications 1 à 11, comprenant en outre une ou plusieurs additions d'eau en tant que diluant.

13. Procédé de production de confiture aux fruits selon l'une quelconque des revendications 1 à 12, dans lequel l'étape (i) de pasteurisation de la confiture est effectuée en portant la confiture contenue dans la cuve de cuisson à une température se situant dans une gamme allant de 86 à 89°C, puis en refroidissant la confiture contenue dans la cuve de cuisson à une température se situant dans une gamme allant de 75 à 80°C.

14. Procédé de production de confiture aux fruits selon la revendication 13, dans lequel le refroidissement de la confiture est effectué en mettant la cuve de cuisson en pression négative à un vide manométrique de 45 à 50 % (-456 à -506,6 millibar).

15. Procédé de production de confiture aux fruits selon l'une quelconque des revendications 1 à 14, dans lequel l'étape (j) de conditionnement de la confiture dans des moyens de conditionnement comprend une étape de transfert de la confiture pasteurisée dans une cuve tampon suivie d'une étape de remplissage des moyens de conditionnement à partir de la cuve tampon.

## Patentansprüche

1. Verfahren zur Herstellung von Konfitüre aus Früchten, umfassend die folgenden Schritte:
(a) Übertragen der zuvor vorbereiteten Früchte in einen Kochkessel,
(b) Vorkochen der in dem Kochkessel enthaltenen Früchte,
(c) Hinzufügen einer bestimmten Menge an Zucker zu den vorgekochten, im Kochkessel enthaltenen Früchte,
(d) Vakuumkochen des Inhalts des Kochkessels mit Konzentration des Inhalts des Kochkessels durch Verdampfen von Flüssigkeit,
(e) Rückgewinnen einer ersten Fraktion verdampfter Flüssigkeit in Form eines ersten Kondensats,
(f) Hinzufügen von Pektin zum ersten, in Schritt (e) zurückgewonnen Kondensat, um ein Kondensat-Pektin-Gemisch zu erhalten,
(g) Hinzufügen des ersten Kondensat-Pektin-Gemischs aus Schritt (f) zum Inhalt des Kochkessels,
(h) Hinzufügen von Citronensäure zum Inhalt des Kochkessels, um eine Konfitüre zu erhalten,
(i) Pasteurisieren der Konfitüre,
(j) Verpacken der pasteurisierten Konfitüre in Verpackungsmittel.

2. Verfahren zur Herstellung von Konfitüre aus Früchten nach Anspruch 1, wobei der Vorkochschritt (b) der im Kochkessel enthaltenen Früchte bei einer Temperatur in einem Bereich von 38 bis 47 °C durchgeführt wird.

3. Verfahren zur Herstellung von Konfitüre aus Früchten nach Anspruch 1 oder 2, wobei der Vakuumkochschritt (d) des Inhalts des Kochkessels bei einer Temperatur in einem Bereich von 62 bis 67 °C unter einem manometrischen Vakuum von 70 bis 84 % (-709,3 bis -851,1 Millibar) durchgeführt wird.

4. Verfahren zur Herstellung von Konfitüre aus Früchten nach Anspruch 3, wobei der Vakuumkochschritt (d) des Inhalts des Kochkessels unter einem manometrischen Vakuum von 72 bis 80 % (-729,5 bis -810,6 Millibar) durchgeführt wird.

5. Verfahren zur Herstellung von Konfitüre aus Früchten nach einem der Ansprüche 1 bis 4, wobei das erste, in Schritt (e) zurückgewonnene Kondensat ein Gewicht hat, das sich in einem Bereich von 7 bis 18 % in Bezug zum Gesamtgewicht der verwendeten Früchte bewegt.

6. Verfahren zur Herstellung von Konfitüre aus Früchten nach Anspruch 5, wobei das erste, in Schritt (e) zurückgewonnene Kondensat ein Gewicht hat, das sich in einem Bereich von 9 bis 12 % in Bezug zum Gesamtgewicht der verwendeten Früchte bewegt.

7. Verfahren zur Herstellung von Konfitüre aus Früchten nach einem der Ansprüche 1 bis 6, wobei das erste, in Schritt (e) zurückgewonnene Kondensat mehrheitlich ein Kondensat der in Schritt (d) verdampften Flüssigkeit enthält.

8. Verfahren zur Herstellung von Konfitüre aus Früchten nach einem der Ansprüche 1 bis 7, umfassend ferner einen Rückgewinnungsschritt einer zweiten Fraktion in Form eines zweiten Kondensats verdampfter Flüssigkeit.

9. Verfahren zur Herstellung von Konfitüre aus Früchten nach einem der Ansprüche 1 bis 8, wobei der Schritt (g) des Hinzufügens des Gemischs erstes Kondensat-Pektin zum Inhalt des Kochkessels durchgeführt wird, nachdem der Inhalt des Kochkessels auf eine Temperatur gebracht wurde, die sich in einem Bereich von 65 bis 75 °C befindet.

10. Verfahren zur Herstellung von Konfitüre aus Früchten nach einem der Ansprüche 1 bis 9, wobei der Schritt (h) des Hinzufügens von Citronensäure zum Inhalt des Kochkessels nach dem Schritt (g) des Hinzufügens des Gemischs erstes Kondensat-Pektin zum Inhalt des Kochkessels durchgeführt wird.

11. Verfahren zur Herstellung von Konfitüre aus Früchten nach einem der Ansprüche 1 bis 10, umfassend ferner einen Zuschlag von Calciumcitrat.

12. Verfahren zur Herstellung von Konfitüre aus Früchten nach einem der Ansprüche 1 bis 11, umfassend ferner einen oder mehrere Zuschläge von Wasser als Verdünnung.

13. Verfahren zur Herstellung von Konfitüre aus Früchten nach einem der Ansprüche 1 bis 12, wobei der Pasteurisierungsschritt (i) der Konfitüre durch Verbringen der in dem Kochkessel enthaltenen Konfitüre auf eine Temperatur, die sich in einem Bereich von 86 bis 89 °C befindet, danach durch Abkühlen der in dem Kochkessel enthaltenen Konfitüre auf eine Temperatur in einem Bereich von 75 bis 80 °C durchgeführt wird.

14. Verfahren zur Herstellung von Konfitüre aus Früchten nach Anspruch 13, wobei das Abkühlen der Konfitüre durch Versetzen des Kochkessels unter negativen Druck bei einem manometrische Vakuum von 45 bis 50 % (-456 bis -506,6 Millibar) durchgeführt wird.

15. Verfahren zur Herstellung von Konfitüre aus Früchten nach einem der Ansprüche 1 bis 14, wobei der Verpackungsschritt (j) der Konfitüre in Verpackungsmittel einen Übertragungsschritt der pasteurisierten Konfitüre in einen Pufferkessel, gefolgt von einem Füllschritt der Verpackungsmittel ab dem Pufferkessel, umfasst.

## Claims

1. A method for producing fruit jam comprising the following steps of:
(a) transferring previously prepared fruits to a cooking vessel,
(b) pre-cooking the fruits contained in the cooking vessel,
(c) adding a determined amount of sugars to the precooked fruits contained in the cooking vessel,
(d) vacuum cooking the contents of the cooking vessel, with concentration of the contents of the cooking vessel by liquid evaporation,
(e) collecting a first fraction of evaporated liquid in the form of a first condensate,
(f) adding pectin to the first condensate collected in step (e) in order to obtain a condensate-pectin mixture,
(g) adding the first condensate-pectin mixture obtained in step (f) to the contents of the cooking vessel,
(h) adding citric acid to the contents of the cooking vessel in order to obtain a jam,
(i) pasteurizing the jam,
(j) packaging the pasteurized jam in packaging means.

2. The method for producing fruit jam according to claim 1, wherein step (b) of pre-cooking the fruits contained in the cooking vessel is carried out at a temperature in a range from 38 to 47 °C.

3. The method for producing fruit jam according to claim 1 or 2, wherein step (d) of vacuum cooking the contents of the cooking vessel is carried out at a temperature in a range from 62 to 67 °C under a manometric vacuum of 70 to 84 % (-709.3 to -851.1 millibar).

4. The method for producing fruit jam according to claim 3, wherein step (d) of vacuum cooking the contents of the cooking vessel is carried out under a manometric vacuum of 72 to 80 % (-729.5 to -810.6 millibar).

5. The method for producing fruit jam according to any one of claims 1 to 4, wherein the first condensate collected in step (e) has a weight in a range from 7 to 18 % relative to the total weight of the fruits used.

6. The method for producing fruit jam according to claim 5, wherein the first condensate collected in step (e) has a weight in a range from 9 to 12 % relative to the total weight of the fruits used.

7. The method for producing fruit jam according to any one of claims 1 to 6, wherein the first condensate collected in step (e) contains predominantly a condensate of the liquid evaporated in step (d).

8. The method for producing fruit jam according to any one of claims 1 to 7, further comprising a step of collecting a second fraction of evaporated liquid in the form of a second condensate.

9. The method for producing fruit jam according to any one of claims 1 to 8, wherein step (g) of adding the first condensate-pectin mixture to the contents of the cooking vessel is carried out after heating the contents of the cooking vessel to a temperature in a range from 65 to 75 °C.

10. The method for producing fruit jam according to any one of claims 1 to 9, wherein step (h) of adding citric acid to the contents of the cooking vessel is carried out after step (g) of adding the first condensate-pectin mixture to the contents of the cooking vessel.

11. The method for producing fruit jam according to any one of claims 1 to 10, further comprising adding calcium citrate.

12. The method for producing fruit jam according to any one of claims 1 to 11, further comprising adding water one or more times as diluent.

13. The method for producing fruit jam according to any one of claims 1 to 12, wherein step (i) of pasteurizing the jam is carried out by heating the jam contained in the cooking vessel to a temperature in a range from 86 to 89 °C, then by cooling the jam contained in the cooking vessel to a temperature in a range from 75 to 80 °C.

14. The method for producing fruit jam according to claim 13, wherein the jam is cooled by placing the cooking vessel under negative pressure with a manometric vacuum of 45 to 50 % (-456 to -506.6 millibar).

15. The method for producing fruit jam according to any one of claims 1 to 14, wherein step (j) of packaging the jam in packaging means comprises a step of transferring the pasteurized jam to a buffer vessel followed by a step of filling the packaging means from the buffer vessel.
